# EUROPÄISCHE PATENTSCHRIFT

(11) **EP 2 353 360 B1**
(45) Veröffentlichungstag und Bekanntmachung des Hinweises auf die Patenterteilung: **01.05.2013**
(21) Anmeldenummer: 11401012.7
(22) Anmeldetag: 01.02.2011
(51) Int. Cl.: A01C 15/00, A01C 17/00

(54) **Zentrifugalstreuer**
Centrifugal spreader
Epandeur centrifuge

(30) Priorität: 04.02.2010 DE 102010000296
(43) Veröffentlichungstag der Anmeldung: 10.08.2011
(73) Patentinhaber: Amazonen-Werke H. Dreyer GmbH & Co. KG, 49205 Hasbergen (DE)
(72) Erfinder: Dreyer, Heinz, 49205, Hasbergen (DE); Johannaber, Stefan Jan, 49536, Lienen (DE); Holthaus, Stefan, 49509, Recke (DE)

(56) Entgegenhaltungen:
- EP-A2- 0 154 326
- EP-A2- 0 165 629
- DE-U1-202008 013 948
- GB-A- 1 147 886

## Beschreibung

Die Erfindung betrifft einen Zentrifugalstreuer gemäß des Oberbegriffes des Patentanspruches 1.

Ein derartiger Zentrifugalstreuer ist beispielsweise durch die DE 697 01 887 T3 bekannt. Dieser Zentrifugalstreuer weist einen Rahmen auf, an dem ein Vorratsbehälter mit zwei Auslauftrichtern befestigt ist. Der obere Bereich des Auslauftrichters mündet in zwei Auslauftrichtern aus, die jeweils durch Dosiervorrichtungen nach unten abgeschlossen sind. Diese Dosiervorrichtungen führen das sich im Vorratsbehälterbehälter und den Auslauftrichtern befindliche Material in einstellbaren Mengen den unterhalb der Dosiervorrichtungen angeordneten und rotierend angetriebenen Schleuderscheiben zu. Der Vorratsbehälter mit seinen beiden Auslauftrichtern besteht aus Vorder- Rück- und Seitenwänden, sowie Wänden des dachförmigen Mittelteils. Die Wände des Vorratsbehälter und der Auslauftrichter sind als unabhängige Wände ausgebildet und miteinander zu einem Vorratsbehälter mit Auslauftrichter durch Schraubverbindungen verbunden. Hierdurch ergibt sich eine zeitaufwendige Montageweise des Vorratsbehälters mit den Auslauftrichtern.

Des weiteren sind in der Praxis Zentrifugalstreuer bekannt geworden, bei denen die Vorratsbehälter in zumindest zwei Auslauftrichtern ausmünden, die ebenfalls aus einzelnen Wänden bestehen. Diese unabhängigen Wände sind mittels Schweißverbindungen zu einem Vorratsbehälter mit zwei Auslauftrichtern zusammengefügt sind. Auch diese Ausgestaltung ist fertigungstechnisch zeitaufwendig. Darüber hinaus neigen die Schweißnähte, mittels denen die einzelnen Wände zusammengefügt sind, zur Rostbildung in dem rauen landwirtschaftlichen Einsatzbetrieb, wobei teilweise aggressive und den Rost fördernden Materialien ausgebracht werden. Ein weiteres Beispiel eines Zentrifugalsteuers zum Ausbringen von körnigen Materialien, wobei das Zentrifugalsteuer die im Oberbegriff des Anspruchs 1 beanspruchten Merkmale aufweist, ist aus dem Dokument GB 1147886 A bekannt.

Der Erfindung liegt die Aufgabe zugrunde, die Fertigung von Vorratsbehältern, der in zwei Auslauftrichter ausmündet, wesentlich zeitlich zu verbessern, wobei rostbildende Stellen an dem Vorratsbehälter und Auslauftrichter vermieden werden sollen.

Diese Aufgabe wird erfindungsgemäß dadurch gelöst, dass der Vorratsbehälter mit seinen Auslauftrichtern einteilig aus einem Kunststoffmaterial hergestellt ist, und die im kennzeichnenden Teil des Anspruchs 1 beanspruchten Merkmale aufweist. Infolge dieser Maßnahme wird in geschlossener Herstellungsweise ein in zwei Auslauftrichtern ausmündender Vorratsbehälter geschaffen, der als ein einziges Bauteil ohne Verbindungsstellen und Nähten hergestellt und ausgestaltet ist. Weiterhin lässt sich ein derartiges Teil mit entsprechenden Rundungen und Neigungen ausgestalten, so dass ein vorteilhaftes Nachrutschen des sich im Vorratsbehälter und den Auslauftrichtern befindlichen Materiales zu den Dosiereinrichtungen ohne nennenswerte Staubildung im Vergleich den Ausgestaltungen von Vorratsbehältern nach dem Stand der Technik besteht.

Die vorteilhafte Ausgestaltung des Vorratsbehälters mit zwei Auslauftrichtern zur Schaffung der voneinander getrennten Auslauftrichtern, die mit Dosiervorrichtung abgeschlossen werden, lässt sich dadurch erreichen, dass die Auslauftrichter durch dachförmigen Bereich getrennt sind.

Um die Voraussetzung für eine vorteilhafte Anordnung eines Sieb- und Sicherheitselementes im Vorratsbehälter zu schaffen, ist vorgesehen, dass in den Wandungen jedes Auslauftrichters ein stufenförmiger, vorzugsweise umlaufender Absatz eingeformt ist. Hierdurch lässt sich in einfacher Weise ein Siebelement in dem Bereich des stufenförmigen Absatzes einsetzen.

Eine vorteilhafte Anordnung und Befestigung des Siebelementes, welches gleichzeitig als Sicherheitselement dient, lässt sich dadurch erreichen, dass im Bereich des stufenförmigen Absatz ein Siebelement mittels Halterungs- und/oder Auflageelementen, vorzugsweise beabstandet zu den Wänden des Vorratsbehälters angeordnet ist.

Um eine ausreichende Tragfähigkeit des Vorratsbehälters sicherzustellen, ist vorgesehen, dass oberhalb des dachförmigen Bereiches ein mit diesem verbundenes Aussteifungselement angeordnet ist.

Um in vorteilhafter Weise ein ausreichend großes Fassungsvermögen entsprechend der jeweiligen Einsatzbedingungen, auch im Rahmen eines Baukastensystem zu gewährleisten, ist vorgesehen, dass an dem oberen umlaufenden Bereich des Vorratsbehälter sich zumindest ein anschließendes Aufsatzelement angeordnet ist. Hierdurch kann das Fassungsvermögen des Vorratsbehälters in einfacher Weise den jeweils gegebenen Einsatzbedingungen angepasst werden.

Eine einfache Anordnung von Rührelementen oberhalb der Dosiervorrichtung lässt sich dadurch gewährleisten, dass an den unteren Bereich der Auslauftrichter Befestigungselemente für die Anordnung der Dosiervorrichtungen, vorzugsweise mit einer Schweißverbindung angeordnet sind.

Um in vorteilhafter Weise eine große Langlebigkeit des Vorratsbehälters zu erreichen ist vorgesehen, dass der Vorratsbehälter aus einem zumindest annähernd rostfreien oder rostträgem Material hergestellt ist.

Eine sehr einfache und schnelle Befestigung des Behälters lässt sich dadurch erreichen, dass der Behälter mittels Schnappverschlüssen am Rahmen befestigt ist.

Eine sehr einfache und schnelle Befestigung der Dosiervorrichtungen an den unteren Bereichen des Behälters lässt sich dadurch erreichen, dass die Dosiervorrichtungen mittels Schnappverschlüssen an den unteren bereichen des Vorratsbehälters befestigt sind.

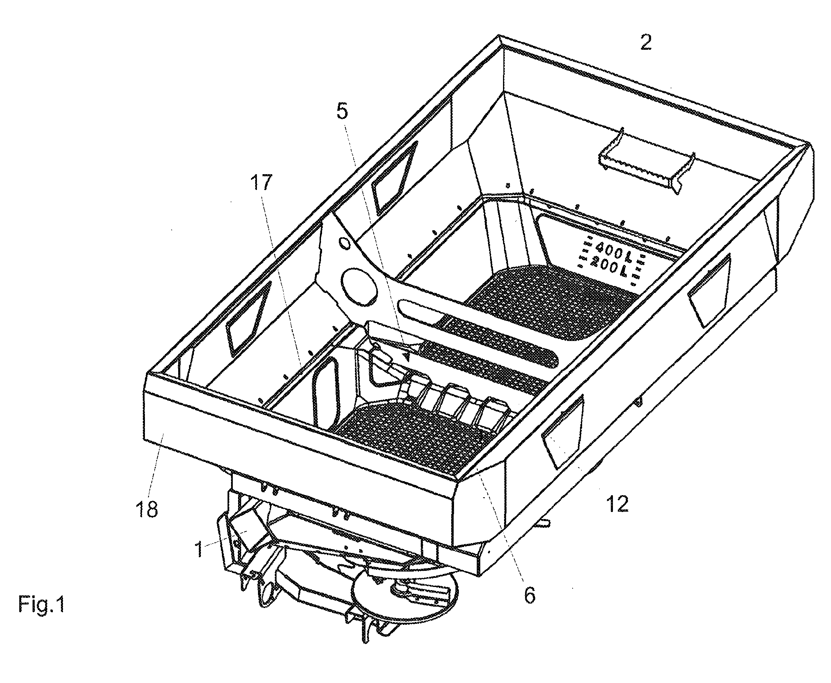

Weitere Einzelheiten der Erfindung sind der Beispielsbeschreibung und den Zeichnungen zu entnehmen. Hierbei zeigen
- Fig. 1: einen erfindungsgemäßen Zentrifugalstreuer in perspektivischer Darstellung,

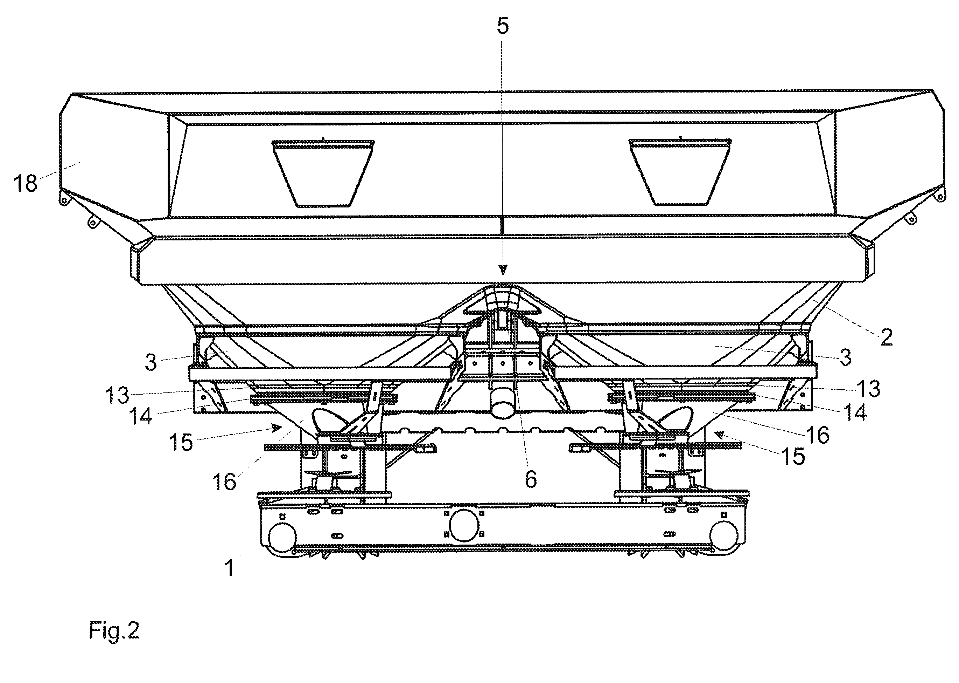

- Fig. 2: den erfindungsgemäßen Zentrifugalstreuer in der Ansicht von hinten,

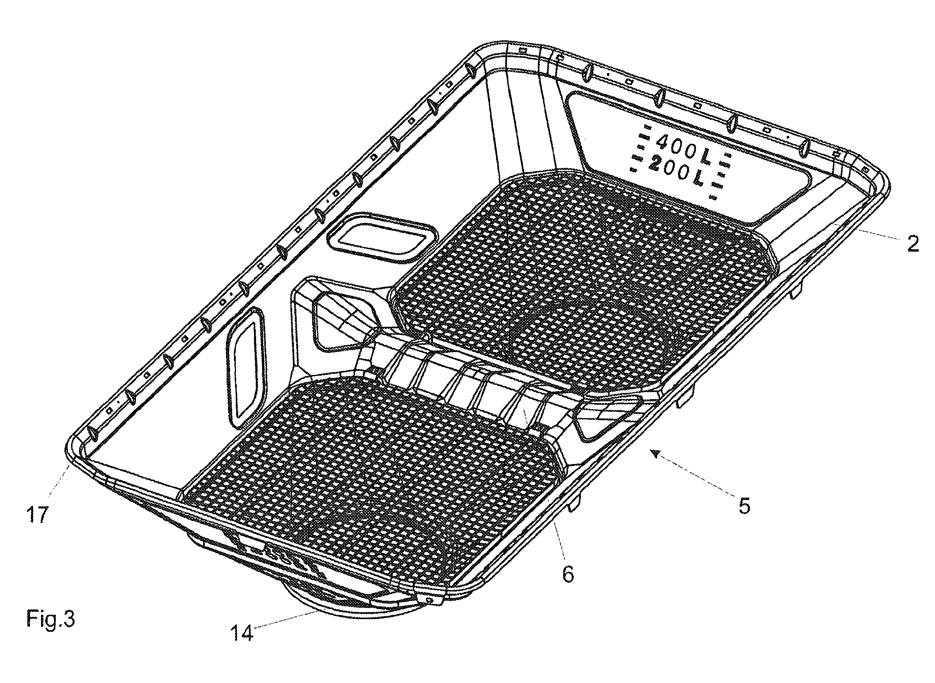

- Fig. 3: einen erfindungsgemäßen Vorratsbehälter des Zentrifugalstreuers mit den darin angeordneten Siebelementen in perspektivischer Darstellung,

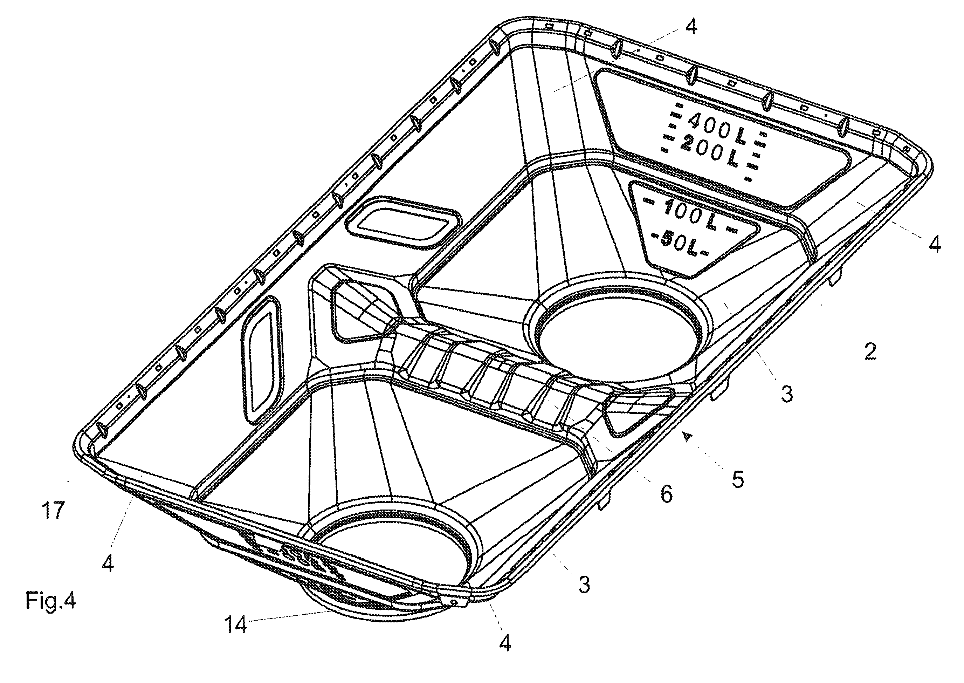

- Fig. 4: den erfindungsgemäßen Vorratsbehälter des Zentrifugalstreuers in perspektivischer Darstellung,

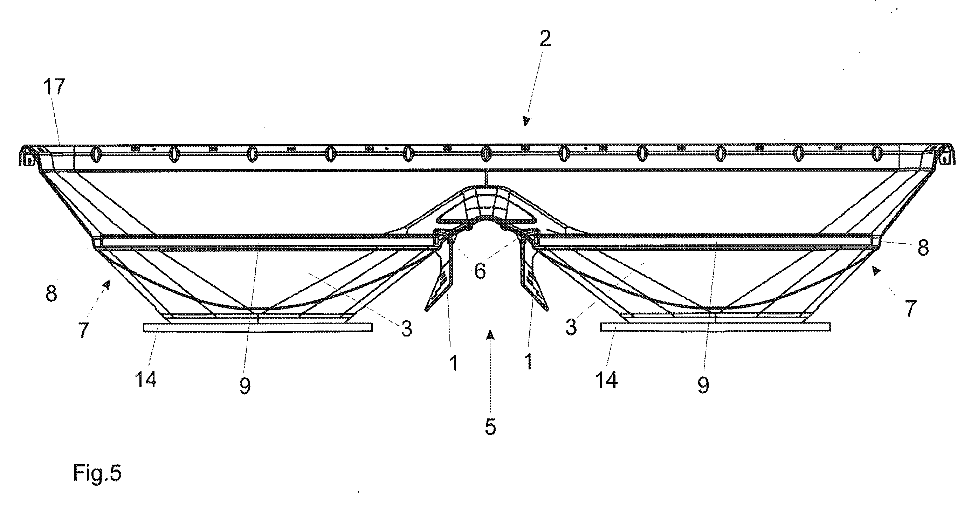

- Fig. 5: den erfindungsgemäßen Vorratsbehälter des Zentrifugalstreuers im Längsschnitt und

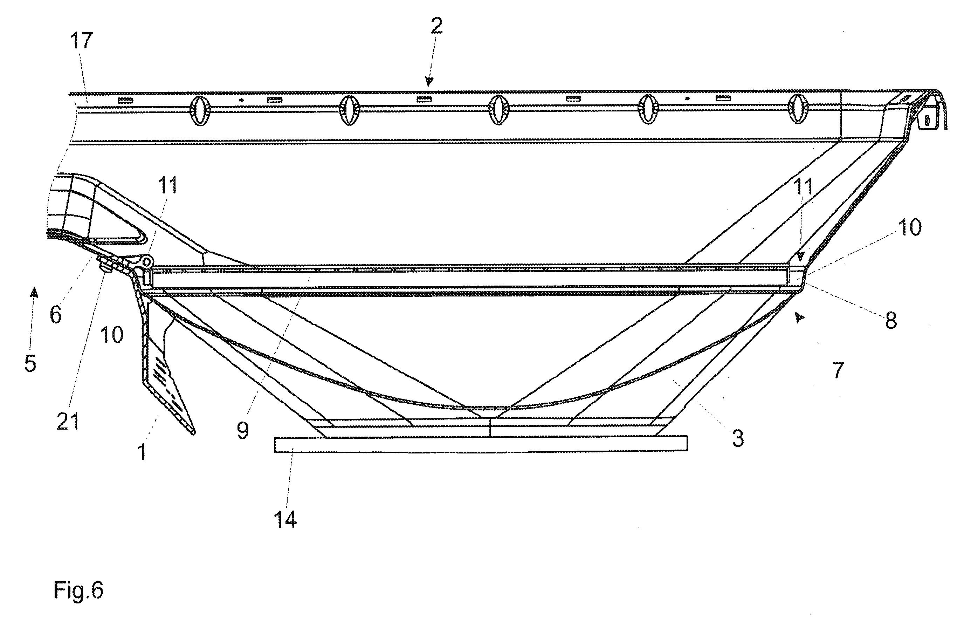

- Fig. 6: die rechte Hälfte des erfindungsgemäßen Vorratsbehälter des Zentrifugalstreuers im Längsschnitt gemäß Fig. 5 in vergrößertem Maßstab.

Die als Zentrifugaldüngerstreuer ausgebildete Verteilmaschine ist geeignet zum Ausbringen von körnigem Materialien, wie beispielsweise Mineraldünger. Der Zentrifugalstreuer weist einen von Rahmenelementen 1 getragenen Vorratsbehälter 2 auf, der in zwei Auslauftrichter 3 ausmündet. Der Rahmen 1 ist auf seiner Vorderseite in bekannter daher nicht dargestellter Weise mit Dreipunktkupplungselementen zum Anbau an einen Dreipunktkraftheber eines Ackerschleppers ausgestattet. Der Vorratsbehälter 2 mit seinen Auslauftrichtern 3 ist einteilig aus einem Kunststoffmaterial hergestellt. Hierdurch ergibt sich die Möglichkeit einen Vorratsbehälter 2 mit unmittelbar angeformten Auslauftrichtern 3 ohne zusätzliche Montagegänge, wie Arbeitsvorgänge zum Erstellen von Schweißverbindungen oder Schraubverbindungen zu erstellen. Durch die Materialauswahl werden Angriffsflächen für Rostvorgänge vermieden. Weiterhin besteht durch die Ausgestaltung des Vorratsbehälters 2 als Kunststoffteil die Möglichkeit, die Behältereckbereiche 4 besonders günstig für das Nachrutschen von dem in dem Vorratsbehälter 2 sich befindlichen Materialien auszubilden.

Im mittleren Bereich 5 des Vorratsbehälters 2, der durch die Formgebung sich ergibt, befindet sich ein die Auslauftrichter 3 trennendes Dachelement 6, welches durch einen dachförmigen Bereich gebildet wird.

In den Wandungen 7 der Auslauftrichter 3 des Vorratsbehälters 2 ist ein stufenförmiger, umlaufender Absatz 8 eingeformt. Dieser Bereich 8 dient zur Aufnahme eines im Vorratsbehälters 2 bzw. im oberen Bereich des jeweiligen Auflauftrichter 3 angeordneten Siebelementes 9. Diese Siebelemente 9 sind im Bereich des jeweiligen stufenförmigen Absatzes 8 mittels Halterungs- oder Auflageelementen 10 angeordnet, und zwar derart, dass die Siebelemente 9 beabstandet zu den Wänden 7 des Vorratsbehälters 2 bzw. der Auslauftrichter angeordnet sind. Hierdurch ergibt sich ein Spalt 11 zwischen den Wänden 7 der Auslauftrichter 6 und dem jeweiligen Siebelement 9, so dass hier Material durchrutschen kann, damit sich keine Stauungen im Bereich der Wandungen des Vorratsbehälters 2 und Auslauftrichter 9 oberhalb der Siebelemente 9 bilden können.

Oberhalb des durch den Tiefziehvorgang ausgebildeten dachförmigen Bereiches 6 ist ein mit dem oberen Bereich des dachförmigen Elementes 6 verbundenes Aussteifungselement 12 angeordnet und mit diesem Bereich verbunden, um eine Vergrößerung der Tragfähigkeit und Stabilität des Vorratsbehälters 2 zu erreichen.

An den unteren Enden 13 der Auslauftrichter 3 sind Befestigungselemente 14 für die Anordnung der die Auslauftrichter 3 nach unten abschließenden Dosiervorrichtungen 15 angeordnet. Diese Befestigungselemente 14 sind an den unteren Bereichen 13 der Auslauftrichter 3 einstückig angeformt. Die Dosiervorrichtungen 15 weisen jeweils einen trichterförmigen Auslauftopf 16 auf, der mit den Dosiereinrichtungen, die aus einer Öffnung in dem Bodenbereich des Auslauftopfes 16 mit zugeordnetem Schieber, der die Öffnungsweite der Auslauföffnung einstellt oder verschließt, ausgestattet ist. In dem Auslauftopf 16 der Dosiervorrichtungen 15 sind Rührelemente angeordnet, welche an den Wänden der Dosiervorrichtung des Auslauftopfes 16 gelagert sind.

An dem oberen Rand 17 des Vorratsbehälters 2, der mit den Rahmenelementen 1 verbunden ist, ist ein sich an den oberen umlaufenden Bereich des Vorratbehälters 2 anschließendes Aufsatzelement 18 zur Vergrößerung des Fassungsvermögens des Vorratsbehälters 2 angeordnet. Es können auch mehrere Aufsatzelemente 18 zur Vergrößerung des Fassungsvermögens aufeinander angeordnet werden.

Der Vorratsbehälter 2 ist aus einem Kunststoffmaterial hergestellt, um so eine möglichst lange Lebensdauer der Maschine zu erreichen.

Unterhalb der Dosiervorrichtungen 15 sind die rotierend angetriebenen und mit Wurfschaufeln 19 besetzten Schleuderscheiben 20 angeordnet, denen das sich im Vorratsbehälter befindliche Material zur Breitverteilung auf der zu bestreuenden Bodenoberfläche verteilt wird.

Der Vorratsbehälter 2 sitzt auf den Rahmenelementen 1 auf und ist an diesen mittels Schnappverschlüssen gesichert befestigt. Ebenfalls können die Dosiervorrichtungen 15 mittels Schnappverschlüssen an den Befestigungselementen befestigt sein.

## Patentansprüche

1. Zentrifugalstreuer zum Ausbringen von körnigen Materialien mit einem von Rahmenelementen (1) getragenen in zumindest zwei Auslauftrichter ausmündenden Vorratsbehälter (2), wobei die Auslauftrichter (3) jeweils von Dosiervorrichtungen (15) abgeschlossen sind, wobei unterhalb der Dosiervorrichtungen (15) rotierend angetriebene mit Wurfschaufeln besetzte Schleuderscheiben angeordnet sind, wobei der Vorratsbehälter (2) mit seinen Auslauftrichtern (3) einteilig aus einem Kunststoffmaterial hergestellt ist; **dadurch gekennzeichnet, dass** in den Wandungen (7) jedes Auslauftrichters (3) ein stufenförmiger, vorzugsweise umlaufender Absatz (8) eingeformt ist, und dass im Bereich des stufenförmigen Absatzes (8) ein Siebelement (9) mittels Halterungs- und/oder Auflageelementen (10), vorzugsweise beabstandet zu den Wänden (7) des Vorratsbehälters (2) angeordnet ist.

2. Zentrifugalstreuer nach Anspruch 1, **dadurch gekennzeichnet, dass** die Auslauftrichter (3) durch einen dachförmigen Bereich (6) getrennt sind

3. Zentrifugalstreuer nach Anspruch 2, **dadurch gekennzeichnet, dass** oberhalb des dachförmigen Bereiches (6) ein mit diesem verbundenes Aussteifungselement (12) angeordnet ist.

4. Zentrifugalstreuer nach zumindest einem der vorstehenden Ansprüche, **dadurch gekennzeichnet, dass** an dem oberen umlaufenden Bereich (19) des Vorratsbehälter (2) sich zumindest ein anschließendes Aufsatzelement (20) angeordnet ist.

5. Zentrifugalstreuer nach zumindest einem der vorstehenden Ansprüche, **dadurch gekennzeichnet, dass** an den jeweiligen unteren Bereichen (13) der Auslauftrichter (3) einen trichterförmigen Bereich aufweisende Dosiervorrichtungen (15) mit an den Wänden der Dosiervorrichtungen (15) gelagerten Rührelementen angeordnet sind.

6. Zentrifugalstreuer nach zumindest einem der vorstehenden Ansprüche, **dadurch gekennzeichnet, dass** der Behälter (2) mittels Schnappverschlüssen (21) am Rahmen (1) befestigt ist.

7. Zentrifugalstreuer nach zumindest einem der vorstehenden Ansprüche, **dadurch gekennzeichnet, dass** die Dosiervorrichtungen (15) mittels Schnappverschlüssen an den unteren Bereichen (13) des Vorratsbehälters (1) befestigt sind.

## Claims

1. Centrifugal spreader for discharging granular materials, with a storage tank (2) which is supported by frame elements (1) and leads into at least two discharge hoppers, wherein the discharge hoppers (3) are each closed by metering devices (15), wherein rotatingly driven spinning discs equipped with thrower blades are arranged below the metering devices (15), and wherein the storage tank (2) together with the discharge hoppers (3) thereof is produced as a single part from a plastics material, **characterized in that** a step-shaped, preferably encircling shoulder (8) is moulded into the walls (7) of each discharge hopper (3), and **in that** a sifting element (9) is arranged in the region of the step-shaped shoulder (8) in a manner preferably spaced apart from the walls (7) of the storage tank (2) by means of mounting and/or bearing elements (10).

2. Centrifugal spreader according to Claim 1, **characterized in that** the discharge hoppers (3) are separated by a roof-shaped region (6).

3. Centrifugal spreader according to Claim 2, **characterized in that** a stiffening element (12) which is connected to the roof-shaped region (6) is arranged above the latter.

4. Centrifugal spreader according to at least one of the preceding claims, **characterized in that** at least one adjoining attachment element (20) is arranged on the upper encircling region (19) of the storage tank (2).

5. Centrifugal spreader according to at least one of the preceding claims, **characterized in that** metering devices (15) having a funnel-shaped region are arranged on the respective lower regions (13) of the discharge hoppers (3) with stirring elements mounted on the walls of the metering devices (15).

6. Centrifugal spreader according to at least one of the preceding claims, **characterized in that** the tank (2) is fastened to the frame (1) by means of snap fasteners (21).

7. Centrifugal spreader according to at least one of the preceding claims, **characterized in that** the metering devices (15) are fastened to the lower regions (13) of the storage tank (2) by means of snap fasteners.

## Revendications

1. Epandeur centrifuge pour distribuer des matière en grains comprenant un réservoir (2) porté par des éléments de châssis (1), débouchant dans au moins deux trémies de sortie, les trémies de sortie (3) étant à chaque fois fermées par des dispositifs de dosage (15), des disques centrifuges garnis de pales d'épandage et entraînés en rotation étant disposés sous les dispositifs de dosage (15), le réservoir (2) étant fabriqué d'une seule pièce avec ses trémies de sortie (3) en un matériau en plastique ; **caractérisé en ce que** dans les parois (7) de chaque trémie de sortie (3) est façonné un épaulement (8) de préférence périphérique en forme de gradin, et **en ce que** dans la région de l'épaulement en forme de gradin (8) un élément de tamis (9) est disposé au moyen d'éléments de retenue et/ou d'appui (10), de préférence de manière espacée des parois (7) du réservoir (2).

2. Epandeur centrifuge selon la revendication 1, **caractérisé en ce que** les trémies de sortie (3) sont séparées par une région (6) en forme de toit.

3. Epandeur centrifuge selon la revendication 2, **caractérisé en ce qu'**au-dessus de la région (6) en forme de toit est disposé un élément de renfort (12) connectée à celle-ci.

4. Epandeur centrifuge selon au moins l'une quelconque des revendications précédentes, **caractérisé en ce qu'**au moins un élément de recouvrement se raccordant (20) est disposé sur la région périphérique supérieure (19) du réservoir (2).

5. Epandeur centrifuge selon au moins l'une quelconque des revendications précédentes, **caractérisé en ce que** des dispositifs de dosage (15) présentant une région en forme de trémie sont disposés au niveau des régions inférieures respectives (13) des trémies de sortie (3), avec des éléments agitateurs montés sur les parois des dispositifs de dosage (15).

6. Epandeur centrifuge selon au moins l'une quelconque des revendications précédentes, **caractérisé en ce que** le réservoir (2) est fixé par le biais de fermetures par encliquetage (21) sur le châssis (1).

7. Epandeur centrifuge selon au moins l'une quelconque des revendications précédentes, **caractérisé en ce que** les dispositifs de dosage (15) sont fixés par le biais de fermetures par encliquetage aux régions inférieures (13) du réservoir (1).
